Europäisches Patentamt

(19) European Patent Office

Office européen des brevets

(11) Numéro de publication: **0 094 266**

**B1**

(12) **FASCICULE DE BREVET EUROPEEN**

(45) Date de publication du fascicule du brevet: **16.08.90**

(51) Int. Cl.⁵: **G 01 N 27/22**

(21) Numéro de dépôt: **83400726.2**

(22) Date de dépôt: **12.04.83**

(54) **Procédé de fabrication d'un capteur de température ou d'humidité du type à couches minces et capteurs obtenus.**

(30) Priorité: **11.05.82 FR 8208159**

(43) Date de publication de la demande:
**16.11.83 Bulletin 83/46**

(45) Mention de la délivrance du brevet:
**16.08.90 Bulletin 90/33**

(84) Etats contractants désignés:
**DE GB IT NL**

(56) Documents cités:
**FR-A-2 203 520**
**FR-A-2 339 169**
**GB-A-1 513 371**
**US-A-3 350 941**
**US-A-4 262 532**

**PATENT ABSTRACTS OF JAPAN, vol. 6, no. 209
(P-150)1087r, 21 octobre 1982; & JP-A-57 114
830 (MATSUSHITA DENKO K.K.) 16-07-1982**

(73) Titulaire: **DIRECTION DE LA METEOROLOGIE DU
MINISTERE DES TRANSPORTS
77, rue de Sèvres
F-92106 Boulogne-Billancourt Cedex (Hauts de
Seine) (FR)**

(72) Inventeur: **Abadie, Gabriel
49, rue du Vieil Orme
F-78120 Rambouillet (FR)**
Inventeur: **Loitiere, Bernard
16, Avenue du Pasteur M.L.King
F-78230 Le Pecq (FR)**

(74) Mandataire: **Chevallier, Robert Marie Georges
Cabinet BOETTCHER 23, rue La Boétie
F-75008 Paris (FR)**

## Description

L'invention a pour objet un procédé de fabrication d'un capteur à couches minces servant à la mesure de la température ou de l'humidité d'un milieu gazeux, par exemple l'atmosphère naturelle; elle couvre le capteur obtenu par ce procédé que l'on peut réaliser en capteur à double fonction capable de mesurer simultanément le température et l'humidité.

On connait déjà des capteurs à couches minces destinés en particulier à la mesure du degré d'humidité d'un milieu gazeux. Ces capteurs sont constitués essentiellement par un support lisse généralement en verre sur lequel on dépose une première couche métallique puis une couche de polymère et une deuxième couche métallique très mince (150 Å) afin qu'elle soit poreuse et sensible à la vapeur d'eau. La couche de polymère qui joue le rôle du diélectrique dans un condensateur est une matière hydrophile qui a une faible épaisseur (10 micromètres) afin que le temps de réponse du capteur aux variations de l'humidité soit lui-même faible, par exemple de l'ordre de la seconde.

Les propriétés recherchées d'un tel capteur s'obtiennent grâce à la réalisation précise de ces couches d'épaisseur mince et constante. De ce fait, le coût est élevé et le taux de rebut est important parce que la couche mince de polymère est souvent trop mince et laisse se créer un court-circuit entre les électrodes.

Cet état de la technique est illustré par le brevet français No. 2 203 520. La difficulté pratique de réalisation peut s'apprécier aussi d'après le contenu d'un autre brevet français No. 2 339 169 où il prévu d'utiliser une matière hydrophile en une ou plusieurs couches monomoléculaires.

Le document GB—A—1 513 371 décrit un hygromètre électrique de type capacitif dans lequel un support en verre ou en céramique reçoit une première couche métallique d'une épaisseur de 0,05 µm, une première couche diélectrique en céramique d'une épaisseur de 0,05 à 1 µm, une seconde couche diélectrique en une substance hygroscopique (Ca F2) d'une épaisseur de 3 à 4 µm et enfin une couche métallique poreuse d'une épaisseur de 0,05 µm. Il n'est pas envisagé de déposer ces couches autrement que sous vide, par pulvérisation cathodique.

La fabrication de cet hygromètre nécessite une grande précision et elle est coûteuse.

Le but principal de l'invention est d'apporter un procédé de fabrication d'un capteur à couches minces, à faible temps de réponse, grâce auquel le diélectrique est réalisable avec plus de facilité même sur une surface de base irrégulière, sans pourcentage appréciable de rebut.

La fabrication est donc plus simple et plus rapide et les capteurs conformes à l'invention sont considérablement plus économiques que les capteurs connus jusqu'à présent.

Ce but est atteint par un procédé qui se distingue des procédés antérieurs par le fait que l'élément diélectrique interposé entre les deux armatures du condensateur est composé, de façon connue en soi, de deux couches superposées mais ce sont des couches de polymère déposé à l'aide d'une solution de polymère, ces deux couches étant compatibles. Entre elles mais comprenant des solvants spécifiques différents, la première couche étant choisie pur la facilité de son étalement en couche régulière sur une surface accidentée et pour sa capacité d'adhérence à cette surface, la seconde couche étant choisie pour ses propriétés diélectriques vis à vis de l'humidité. L'invention est définie dans la revendications 1 et 10.

L'emploi de deux couches successives de polymère conformément à l'invention a une première conséquence importante.

Selon une caractéristique secondaire de l'invention, on utilise comme substrat un support classique de circuit imprimé ayant sur une face au moins une couche de cuivre dans laquelle on fait apparaître sans difficulté, en lui donnant un contour quelconque désiré, l'une des électrodes du capteur.

Dans un mode de mise en oeuvre préféré du procédé de l'invention, on fait apparaître sur le support de circuit imprimé qui sert de substrat deux électrodes séparées par un intervalle, on dépose les couches successives de polymère sur ces deux électrodes, on élimine en plusieurs endroits ces couches de polymère en regard de l'une des électrodes et on dépose ensuite une couche métallique qui couvre la dernière couche de polymère et qui vient en contact avec ladite électrode aux endroits de celle-ci où les couches de polymère ont été éliminées.

On obtient ainsi un élément capacitif dont l'une des armatures est constituée par une des électrodes réalisées sur le support du circuit imprimé et dont l'autre armature est constituée par la couche métallique déposée qui vient en contact avec l'autre électrode, éloignée de la première, également réalisée sur le support du circuit imprimé. De cette façon, on ne rencontre aucune difficulté à réunir ce capteur capacitif à un circuit électrique puisqu'on exécute facilement des connexions sur les circuits imprimés. La couche de cuivre de ces derniers est relativement épaisse (5 à 20 µm).

L'invention permet de disposer d'un avantage supplémentaire.

En éliminant sur le substrat, par gravure chimique, la partie non utilisée de la couche de cuivre, on peut donner aux électrodes la configuration que l'on désire. En particulier, on peut donner à la première électrode, celle qui n'est pas en contact avec la couche métallique finale, la configuration typique d'une résistance imprimée se développant en zig-zag entre deux plots de connexion. Ainsi, la première électrode, qui est une armature de l'élément capacitif, constitue aussi entre les deux plots de connexion un élément ohmique dont les variations de la résistance rendent possible la mesure de la température. On dispose donc, sur un même support d'un capteur double de température et d'humidité, de réalisation facile et économique, dont le taux de rebuts de fabrication est extrêmement faible.

Selon une première variante de l'invention, on réalise le capteur de température et le capteur d'humidité sur une même face du substrat; selon une seconde variante, on réalise un capteur de température sur une face et un capteur d'humidité sur la face opposée du substrat.

On donnera maintenant une description d'un exemple de réalisation d'un capteur double conforme à l'invention en précisant certaines opérations avantageuses de mise en oeuvre du procédé de l'invention, sans exclure aucun autre mode de réalisation défini ci-dessus. On se reportera au dessin annexé dans lequel:

—la figure 1 est une vue de dessus d'un capteur d'humidité selon l'invention, avec une variante indiquée en trait mixte comprenant un capteur de température prévu sur une face opposée du substrat,

—la figure 2 est une vue très agrandie en coupe selon II—II de la figure 1 du capteur d'humidité de la figure 1,

—la figure 3 est une vue de dessus d'un capteur double de température et d'humidité réalisé conformément à l'invention sur une même face d'un substrat,

—la figure 4 est une vue très agrandie en coupe selon IV—IV de la figure 3,

—les figures 5, 6, 7 sont des vues schématiques qui montrent l'exécution d'une opération du procédé de l'invention.

On part d'un substrat 1 disponible dans le commerce pour la réalisation des circuits imprimés, ayant sur une face (ou en variante sur les deux faces principales opposées) une couche de cuivre 2, par exemple le substrat connu dans le commerce sous la dénomination KAPTON 127 M sur lequel le cuivre a une épaisseur de 9 μm. Un support en verre-époxy recouvert d'une couche de nickel, de nickel-chrome, d'aluminium, etc., peut convenir aussi.

De préférence on soumet de substrat à un traitement thermique de stabilisation en lui imposant pendant une durée de 24 h. le cycle répété+20°+130°C.

On exécute ensuite une gravure chimique selon les méthodes courantes de gravure des circuits imprimés pour faire apparaître une première électrode 3 de grande dimension à laquelle est réuni un plot de connexion 4, une seconde électrode 5 de petite dimension de préférence analogue à une bande étroite allongée le long d'un côté de la première électrode 3. Cette seconde électrode 5 est réunie à un plot de connexion 6 espacé du plot 4.

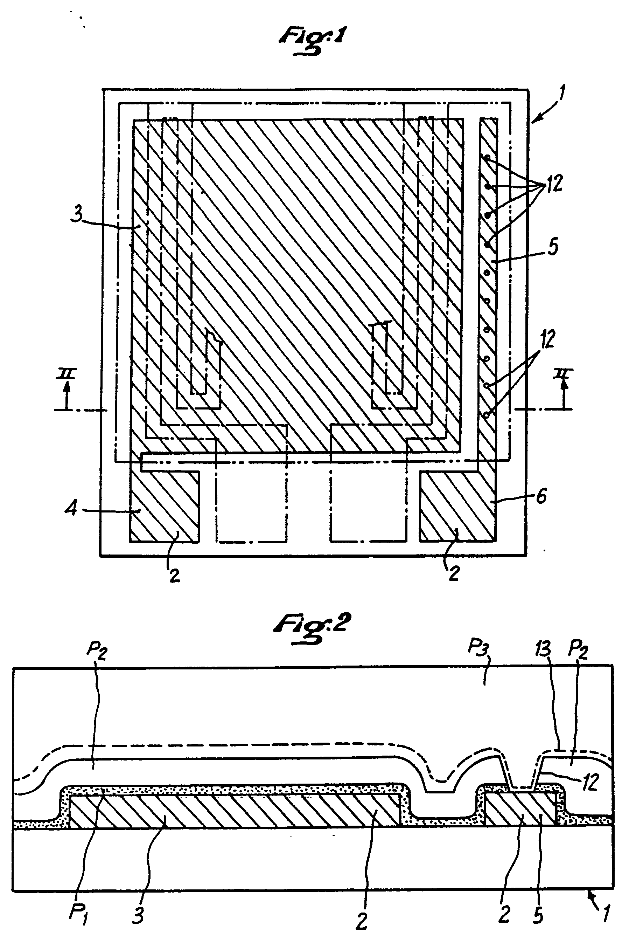

On dépose ensuite sur cette face du substrat en réservant les plots de connexion 4, 6, c'est-à-dire dans une zone contenant les deux électrodes 3, 5, indiquée par un trait mixte double sur la figure 1, une première couche P1 de polymère hydrofuge, par exemple une solution à 3% de polyuréthane, à une épaisseur de 0,3 μm. Cette couche se répand sans précautions particulières, par exemple au pinceau. Elle est choisie pour avoir un grand pouvoir mouillant afin qu'elle s'étale facilement et pour avoir une très bonne adhérence avec le substrat, les électrodes et une seconde couche de polymère.

Cette couche P1 joue un rôle de barrière; elle contribue à l'espacement des armatures du capteur capacitif; elle nivelle les différences superficielles de niveau créées par la gravure chimique.

On dépose ensuite une couche P2 de polymère qui est l'élément sensible du capteur hygrométrique. On la choisit en fonction de ses propriétés électriques vis à vis de l'humidité; son épaisseur peut varier de quelques diziemes de μm à plusieurs dizaines de μm. Par exemple, on peut utiliser une solution à 10% d'ester acétobutyrique de cellulose. Le solvant ou le mélange solvant de la couche P2 doit être choisi de façon à être pratiquement sans effet sur la couche P1.

Cette couche P2 doit avoir une épaisseur aussi régulière que possible au-dessus de la première électrode 3; cette épassieur peut être de 1,4 μm par exemple.

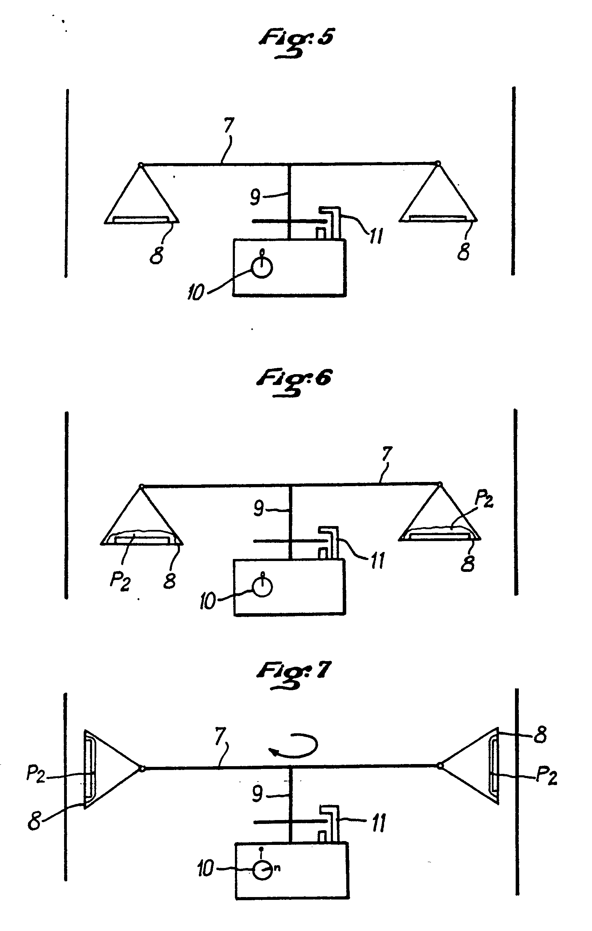

Pour obtenir une épaisseur régulière, une surface lisse, avec une bonne certitude de réussite, de manière reproductible, on procède de préférence par centrifugation verticale, comme l'illustrent les figures 5 à 7.

Un manège à plusieurs bras horizontaux tournants 7 (quatre bras par exemple) est muni à l'éxtrémité libre de chaque bras 7 d'un plateau horizontal 8 suspendu librement de façon à pouvoir s'orienter pour se mettre verticalement à a suite de la rotation sur lui-même d'un mât central 9 qui porte les bras 7. Ce manège est muni d'un variateur de vitesse et d'un compte-tour optoélectronique 11. On pose sur chaque plateau 8 un substrat 1 gravé, recouvert de la couche P1 de polymère. On étale à la main aussi bien que possible la couche P2 et on fait tourner le manège que l'on maintient en rotation, avec les plateaux 8 verticaux (figure 7) jusqu'au séchage de la couche P2. Sous l'effet de la force centrifuge qui s'exerce de manière égale sur la surface du plateau 8, la couche P2 devient et reste bien uniforme. La gravité qui tend à créer un écoulement du haut vers le bas est la cause d'une très minime différence d'épaisseur dont l'effet est difficilement mesurable. Il est d'ailleurs d'autant plus faible que la force centrifuge due à la rotation est plus importante.

Après cette opération, on élimine en plusieurs endroits les couches P1 et P2 au-dessus de la seconde électrode 5, jusqu'à faire apparaître à nu la surface de cette dernière. On procède par perforation thermique ou mécanique en des points 12 espacés le long de cette électrode 5 (figure 1).

Ensuite, on dépose une couche métallique poreuse 13 d'une épaisseur de 150 à 400 Å, par métallisation sous vide ou par pulvérisation cathodique; on peut employer de l'or, du nickel, du nickel-chrome ..., ou tout autre métal ou alliage peu oxydable et peu corrodable. Dans le procédé de l'invention, cette opération est la seule opération coûteuse.

La couche métallique 13 est séparée de la couche 3 par le diélectrique composé des couches P1, P2; aux points 12 elle est directement en contact avec la seconde électrode 5.

On obtient ainsi un capteur hygrométrique très économique que l'on raccorde aisément à un circuit électrique au moyen des plots de connexion 4, 6. Un tel capteur a une constante de temps de l'ordre de la seconde. Cette constante dépend de l'épaisseur des couches P2 et 13. Se durée d'utilisation est faible (de quelques mois) parce que la couche métallique poreuse 13, mince et fragile, n'est pas protégée.

On peut y remédier en déposant sur cette couche métallique 13, une couche P3 supplémentaire d'une solution à 10% de polyuréthane analogue à la couche P2 sauf pour ce qui est du mélannge solvant qui doit être choisi pour être sans effet sur cette couche P2.

La couche P3 apporte une protection mécanique qui rend plus facile les manipulations du capteur qui est ainsi protégé; son épaisseur peut aller de plusieurs $\mu$m à plusieurs dizaines de $\mu$m. Elle est poreuse à l'humidité. Elle prolonge jusqu'à plusieurs années la durée d'utilisation du capteur, en allongeant sa constante de temps qui peut atteindre 1 à 2 minutes.

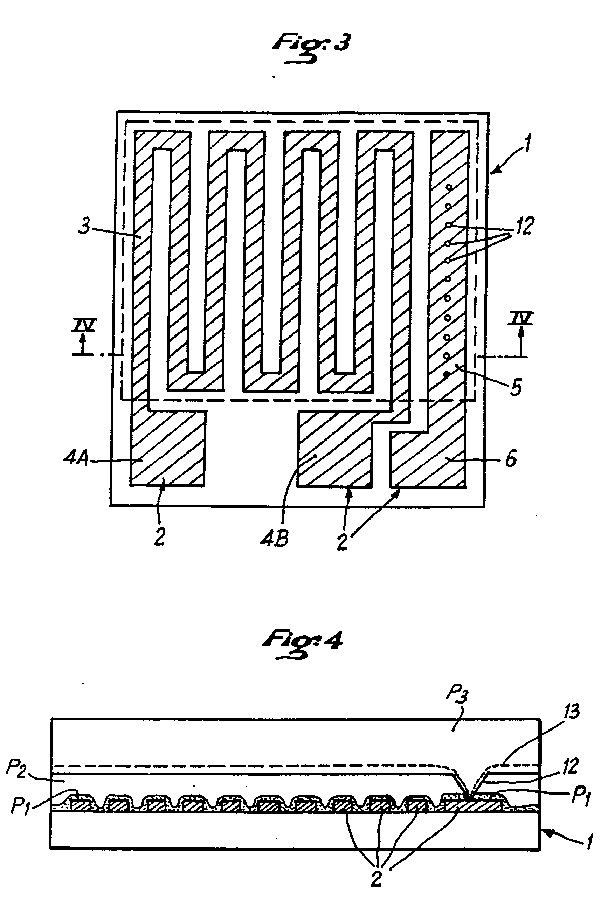

La configuration géométrique de la première électrode 3 n'est pas imposée par le procédé de l'invention. Au contraire, le procédé permet de lui donner facilement toute configuration désirable. En particulier, comme le montrent les figures 3 et 4, on peut donner à la première électrode 3 la configuration typique d'une résistance imprimée telle qu'une bande étroite se poursuivant en U successifs réunis entre un premier plot de connexion 4A et un second plot de connexion 4B. Entre ces deux plots 4A, 4B, on dispose d'une résistance dont les variations en fonction de la température permettent le mesure de celle-ci. On obtient alors un capteur double, hygrométrique entre les plots 4A—4B d'une part et 6 d'autre part, thermométrique entre les plots 4A et 4B. On dépose les couches successives P1, P2, 13 et P3 sur l'électrode-résistance 3 de la même façon qui a été expliquée plus haut.

Un capteur double tel qu'il est illustré par les figures 3 et 4 réalisé avec une couche P1 de 0,3 $\mu$m, d'une solution à 3% de polyuréthane, une couche P2 de 1,4 $\mu$m d'une solution à 10% d'ester acétobutyrique de cellulose, une couche métallique poreuse de 250 Å d'or, avec en variante une couche P3 d'une solution à 10% de polyméthane, avait les caractéristiques suivantes:

—Capteur thermométrique
  —résistance nominale 30 $\Omega\pm$10%
  —coefficient de sensibilité A
    R(T)=Ro (1+AT)
    A=4,21 $10^{-3}$/°C$\pm$0,005
  —linéarité sur un intervalle de 80°C$\pm$0,2°C
  —dérive: non décelable après 3 mois pour une gamme de fonctionnement de +30° à −65°C

—Capteur hygrométrique
  —capacité nominale Co=500 pF$\pm$10%
  —coefficient de sensibilité K
    1/C(u)=1/Co (1+KU)
    K=2,5 $10^{-1}\pm$0,05
  —linéarité$\pm$1,4% entre 10 et 97%
  —hystérésis: non décelable (comprise dans les mesures de linéarité)
  —influence de la température <0,1%/°C
  —dérive sur 3 mois (à l'extérieur):
    pas décelable
  —constante de temps à 20°C
    sans couche P3<1,7 s à 63% d'humidité
    avec couche P3<60 s à 63% d'humidité

Pour réaliser un capteur double, il n'est pas obligatoire de se servir de l'une des armatures du capteur capacitif. A partir d'un substrat ayant deux couches de métal sur ses deux faces opposées, on peut confectionner sur une face un capteur hygrométrique comme représenté en trait plein sur la figure 1 et sur la face opposée un capteur thermométrique comme représenté en trait mixture sur la même figure.

Les substrats pour circuits imprimés disponibles dans le commerce ont des dimenions bien supérieures à celles des capteurs. Sur un même substrat on peut donc graver en une seule fois, sur une seule face ou sur les deux faces, plusieurs capteurs doubles, et les recouvrir tous ensemble des diverses couches P1, P2, 13 et P3 puis découper ensuite les capteurs individuels. La couche P3 est utile aussi à cette fin. Elle donne de la robustesse et protège la couche métallique 13 extrèmement mince; elle bouche également les trous 12 de sorte que l'on peut facilement manipuler le substrat pour le découper sans précautions spéciales. De plus, comme cette couche P3 recouvre totalement la couche métallique 12 et l'isole du milieu environnant, il n'est pas nécessaire que cette couche soit en métal inaltérable et coûteux comme l'or; une couche d'aluminium convient.

En définitive, le procédé de l'invention supprime les opérations très délicates et coûteuses, permet la fabrication simultanée de plusieurs capteurs doubles, élimine les risques de détérioration au moment des soudures de raccordement; il en résulte qu'un capteur conforme à l'invention a un prix de revient qui est environ cinq fois moins élevé que celui des capteurs connus jusqu'à présent.

Dans la description donnée plus haut, on a cité quelques polymères utilisables dans le cadre de l'invention; tous les corps connus dans ce domaine et disponibles dans le commerce, à l'état sec ou en solution, peuvent être employés. Il suffit, selon l'invention, de se servir de solvants spécifiques afin que chaque couche reste intacte lors du dépôt de la couche suivante.

**Revendications**

1. Procédé de fabrication d'un capteur à couches minces, comprenant un support (1) rigide n'absorbant pas l'eau, selon lequel on dépose sur une face au moins de ce support, une couche métallique (2), on sépare cette couche métallique (2) en deux parties (3, 5) voisines distinctes, dont l'une (3) est une première armature de condensateur et l'autre une électrode (5), on dépose sur la couche métallique (2) et sur le support (1) une première couche (P1) de polymère hydrofuge en solution dans un solvant spécifique, ce polymère étant choisi pour avoir en plus de ses propriétés diélectriques, un bon étalement sur le support (1) et sur la couche métallique (2) et une bonne adhérence à ces derniers ainsi qu'à une seconde couche (P2) de polymère hydrophile en solution dans un solvant spécifique et déposée sur ladite première couche, ce polymère étant choisi pour ses propriétés diélectriques, les solutions des polymères des deux couches (P1, P2) étant à base de solvants spécifiques différents, on élimine les deux cokches (P1, P2) de polymère en des points espacés (12) de l'électrode (5) on dépose une couche métallique poreuse (13) sur la seconde couche (P2) de polymère et sur l'électrode (5) auxdits points (12).

2. Procédé selon la revendication 1, selon lequel on donne à la première couche une épaisseur de quelques dixièmes de micromètre.

3. Procédé selon la revendication 1, selon lequel on donne à la seconde couche une épaisseur de un à plusieurs micromètres.

4. Procédé selon la revendication 1, selon lequel on utilise comme support un substrat ayant une couche conductrice sur une face au moins, du type pour circuit imprimé, on fait apparaître par attaque chimique, une première électrode (3) avec un plot de connexion (4), une seconde électrode distincte (5) avec un plot de connexion (6), on dépose la première couche (P1) de polymère hydrofuge, la seconde couche (P2) de polymère hydrophile, on détruit ces couches en plusieurs endroits (12) au-dessus de la seconde électrode (5) jusqu'à mettre à nu celle-ci, on dépose la couche métallique poreuse (13) sur l'ensemble, en réservant les plots de connexion (4, 6) pour le branchement du capteur.

5. Procédé selon la revendication 4 selon lequel on donne à la première électrode (3) la configuration d'une résistance électrique imprimée se trouvant entre deux plots espacés (4A, 4B) de connexion à un circuit électrique pour obtenir un capteur double, hygrométrique entre les plots (4A—4B) d'une part et le plot (6) d'autre part, thermométrique entre les plots (4A—4B).

6. Procédé selon la revendication 4 selon lequel on utilise un substrat à couche conductrice sur ses deux faces opposées on fait apparaître et on réalise sur une face un capteur capacitif selon cette revendication 4 et on fait apparaître sur la face opposée entre deux plots espacés de connexion une résistance imprimée qui constitue un capteur thermométrique.

7. Procédé selon l'une quelconque des revendications 4 à 6, selon lequel on dépose une couche finale (P3) de polymère hydrophile d'une épaisseur de plusieurs micromètres à plusieurs dizaines de micromètres , à partir d'une solution dont le solvant est différent du solvant de la seconde couche (P2).

8. Procédé selon la revendication 7, selon lequel on utilise une solution à 10% de polyuréthane pour réaliser la couche finale (P3).

9. Procédé selon la revendication 2, selon lequel on étale la seconde couche (P2) de polymère par centrifugation en position verticale du substrat.

10. Capteur à couches minces comprenant un support (1), rigide, n'absorbent pas l'eau, une couche métallique (2) déposée sur ce support (1) et séparée en deux parties (3, 5) voisines distinctes, dont l'une (3) est une première armature de condensateur et l'autre (5) est une électrode, une couche de polymère hydrofuge (P1) étendue sur et entre l'armature (3), et l'électrode (5) avec des points (12) espacés laissant à nu en ces points l'électrode (5), une couche métallique supérieure poreuse (13) déposée sur la couche de polymère, mise en contact aux points (12) avec l'électrode (5) et constituant une deuxième armature de condensateur, caractérisé en ce que le polymère hydrofuge (P1) est de type ayant, en plus de ses propriétés diélectriques, un bon étalement sur le support (1) et sur la couche métallique (2) qui le couvre ce support (1) et une bonne adhérence à ces derniers et à une seconde couche (P2) de polymère hydrophile, choisi pour ses propriétés diélectriques, déposée sur la première couche (P1) et ne couvrant pas les points (12) de l'électrode (5).

11. Capteur selon la revendication 10, caractérisé en ce que la première électrode (3) a une configuration de résistance imprimée se trouvant entre deux plots espacés (4A—4B) de connexion.

12. Capteur selon l'une quelconque des revendications 10, 11, caractérisé en ce que le polymère comprend au moins une première couche hydrofuge (P1) déposée sur les électrodes (3, 5) et une seconde couche hydrophile (P2) déposée sur la première couche (P1).

13. Capteur à couches minces, caractérisé en ce que le support est un substrat (1) du type à circuit imprimé avec une couche conductrice sur ses deux faces opposées, l'une de ces faces constituant un capteur selon la revendication 10 et la face opposée présentant une électrode à configuration de résistance imprimée entre deux plots de connexion.

14. Capteur selon l'une quelconque des revendications 10 à 13 caractérisé en ce qu'il comprend une couche finale (P3) de polymère hydrophile ayant une épaisseur de plusieurs micromètres à plusieurs dizaines de micromètres.

**Patentansprüche**

1. Verfahren zum Herstellen eines Dünnschicht-Meßaufnehmers mit einem starren, nicht wasserabsorbierenden Träger (1), dadurch gekennzeichnet, daß man auf wenigstens eine Seite des Trägers eine Metallschicht (2) aufbringt, daß man diese Metallschicht (2) in zwei benachbarte, getrennte Bereiche (3, 5) teilt, deren einer (3) einen ersten Kondensatorbelag und deren anderer eine Elektrode (5) bildet, daß man auf die Metallschicht (2) und auf den Träger (1) eine erste Schicht (P1) eines wasserabweisenden, in einem spezifischen Lösungsmittel gelösten Polymers aufbringt, wobei dieses Polymer so ausgewählt ist, daß es über seine dielektrischen Eigenschaften hinaus auf dem Träger (1) und auf der Metallschicht (2) gut verläuft und gut an diesen haftet, und ferner eine zweite Schicht (P2) eines hydrophilen, in einem spezifischen Lösungsmittel gelösten sowie auf die erste Schicht aufgetragenen Polymers, wobei dieses Polymer nach seinen dielektrischen Eigenschaften ausgewählt wird und wobei die Polymerlösungen der beiden Schichten (P1, P2) auf der Basis unterschiedlicher spezifischer Lösungsmittel aufgebaut sind, daß man die beiden Polymerschichten (P1, P2) an Kontaktstellen (12) der Elektrode (5), die jeweils einen Abstand voneinander haben, entfernt und daß man eine poröse Metallschicht (13) auf die zweite Polymerschicht (P2) und auf die Elektrode (5) an den besagten Kontaktstellen (12) aufbringt.

2. Verfahren nach Anspruch 1, dadurch gekennzeichnet, daß man die erste Schicht mit einer Dicke von einigen Zehntel Mikrometer (μm) ausbildet.

3. Verfahren nach Anspruch 1, dadurch gekennzeichnet, daß man die zweite Schicht mit einer Dicke von einem oder mehreren Mikrometern (μm) ausbildet.

4. Verfahren nach Anspruch 1, dadurch gekennzeichnet, daß als Träger ein Substrat mit einer wenigstens auf einer Seite angeordneten leitenden Schicht nach Art einer gedruckten Schaltung verwendet wird, daß man durch chemische Bearbeitung eine erste Elektrode (3) mit einem Anschlußfeld (4) und eine davon getrennte zweite Elektrode (5) mit einem Anschlußfeld (6) herausarbeitet, daß man die erste wasserabweisende Polymerschicht (P1) und die zweite hydrophile Polymerschicht (P2) aufbringt, daß man diese Schichten an mehreren Kontaktstellen (12) über der zweiten Elektrode (5) durchbricht, bis diese dort blank ist, und daß man die poröse Metallschicht (13) auf die Anordnung aufbringt, wobei die Anschlußfelder (4, 6) für den Anschluß des Meßaufnehmers ausgespart werden.

5. Verfahren nach Anspruch 4, dadurch gekennzeichnet, daß man der ersten Elektrode (3) die Konfiguration eines gedruckten elektrischen Widerstandes gibt, welcher sich zwischen zwei mit Abstand zueinander angeordneten Anschlußfeldern (4A, 4B) für den Anschluß an einen elektrischen Schaltkreis erstreckt, so daß sich ein doppeltwirkender Meßaufnehmer ergibt, nämlich ein hygrometrischer Meßaufnehmer zwischen den Anschlußfeldern (4A—4B) einerseits sowie dem Ansclußfeld (6) andererseits und ein thermometrischer Meßaufnehmer zwischen den Anschlußfeldern (4A—4B).

6. Verfahren nach Anspruch 4, dadurch gekennzeichnet, daß man ein Substrat mit auf seinen beiden einander abgewandten Seiten angeordneten leitenden Schichten verwendet, daß man auf einer dieser Seiten einen Kapazitiv-Meßaufnehmer gemäß Anspruch 4 realisiert und auf der abgewandten anderen Seite zwischen zwei mit Abstand zueinander angeordneten Anschlußfeldern einen gedruckten Widerstand herausarbeitet, welcher einen thermometrischen Meßaufnehmer bildet.

7. Verfahren nach einem der Ansprüche 4 bis 6, dadurch gekennzeichnet, daß man eine Abschlußschicht (P3) aus einem hydrophilen Polymer mit einer Dicke zwischen einigen Mikrometern (μm) bis zu mehreren zehn Mikrometern (μm) aufträgt, und zwar aus einer Lösung, deren Lösungsmittel vom Lösungsmittel der zweiten Schicht (P2) verschieden ist.

8. Verfahren nach Anspruch 7, dadurch gekennzeichnet, daß man eine Lösung mit 10% Polyurethan zur Herstellung der Abschlußschicht (P3) verwendet.

9. Verfahren nach Anspruch 2, dadurch gekennzeichnet, daß man die zweite Polymerschicht (P2) durch Zentrifugieren bei einer vertikalen Lage des Substrates verteilt.

10. Dünnschicht-Meßaufnehmer, welcher einen starren, nicht wasserabsorbierenden Träger (1) umfaßt, ferner eine auf dem Träger (1) angeordnete Metallschicht (2), die in zwei benachbarte, getrennte Bereiche (3, 5) geteilt ist, deren einer (3) einen ersten Kondensatorbelag und deren anderer (5) eine Elektrode bildet, ferner eine wasserabstoßende Polymerschicht (P1), die sich über und zwischen dem Kondensatorbelag (3) sowie der Elektrode (5) mit ihren im Abstand voneinander angeordneten Kontaktstellen (12) erstreckt und diese Kontaktstellen (12) der Elektrode blank läßt, ferner eine obere poröse Metallschicht (13), die auf die Polymerschicht aufgebracht wird und an den Kontaktstellen (12) mit der Elektrode (5) in Kontakt gebracht wird, so daß sie einen zweiten Kondensatorbelag bildet, dadurch gekennzeichnet, daß das wasserabstoßende Polymer (P1) von einem Typ ist, welcher über die dielektrischen Eigenschaften hinaus auf dem Träger (1) und der Metallschicht (2), die den Träger (1) bedeckt, gut verläuft und an diesen sowie an einer zweiten nach ihren dielektrischen Eigenschaften ausgewählten hydrophilen Polymerschicht (P2) gut haftet, die auf die erste Polymerschicht (P1) aufgetragen ist und die Kontaktstellen (12) der Elektrode (5) nicht bedeckt.

11. Meßaufnehmer nach Anspruch 10, dadurch gekennzeichnet, daß die erste Elektrode (3) die Konfiguration eines gedruckten Widerstandes hat, welcher sich zwischen zwei mit Abstand voneinander angeordneten Anschlußfeldern (4A—4B) erstreckt.

12. Meßaufnehmer nach einem der Ansprüche 10 und 11, dadurch gekennzeichnet, daß das Polymer wenigstens eine erste, wasserabstoßende, auf die Elektroden (3, 5) aufgebrachte Schicht und eine zweite hydrophile, auf die erste Shicht (P1) aufgebrachte Schicht (P2) umfaßt.

13. Dünnschicht-Meßaufnehmer, dadurch gekennzeichnet, daß der Träger ein Substrat (1) nach Art einer gedruckten Schaltung mit jeweils einer leitenden Schicht auf seinen beiden einander abgewandten Seiten ist, wobei eine dieser Seiten einen Meßaufnehmer gemäß Anspruch 10 bildet und die abgewandte Seite eine Elektrode mit der Konfiguration eines gedruckten Widerstandes darstellt, der sich zwischen zwei Anschlußfeldern erstreckt.

14. Meßaufnehmer nach einem der Ansprüche 10 bis 13, dadurch gekennzeichnet, daß er eine Abschlußschicht (P3) aus einem hydrophilen Polymer mit einer Dicke umfaßt, die zwischen mehreren Mikrometern (µm) und mehreren zehn Mikrometern (µm) liegt.

**Claims**

1. A process for the production of a thin film sensor comprising a rigid support (1) which does not absorb water, wherein a metal film (2) is deposited on one face at least of said support, said metal film (2) is separated into two separate adjoining portions (3, 5), one (3) of which is a first capacitor plate and the other is an electrode (5), a first film (P1) of water-repellent polymer in solution in a specific solvent is deposited on the metal film (2) and on the support (1), said polymer being selected to present in addition to its dielectric properties good spreading over the support (1) and over the metal film (2) and good adhesion to the support and the metal film and to a second film (P2) of hydrophilic polymer in solution in a specific solvent and deposited on said first film, said polymer being selected for its dielectric properties, the solutions of the polymers of the two films (P1, P2) being based on different specific solvents, the two films (P1, P2) of polymer are removed at spaced points (12) of the electrode (5), and a porous metal film (13) is deposited on the second film (P2) of polymer and on the electrode (5) at said points (12).

2. A process according to claim 1 wherein the first film is of a thickness of a few tenths of a micrometre.

3. A process according to claim 1 wherein the thickness of the second film is from 1 to a plurality of micrometres.

4. A process according to claim 1 wherein the support is a substrate having a conductive film on at least one face, of the type for a printed circuit, a first electrode (3) with a connecting portion (4) and a separate second electrode (5) with a connecting portion (6) are formed by chemical attack, the first film (P1) of water-repellent polymer and the second film (P2) of hydrophilic polymer are deposited, said films are destroyed at a plurality of locations (12) above the second electrode (5) until the electrode is bared, and the porous metal film (13) is deposited over the whole, reserving the connecting portions (4, 6) for connection of the sensor.

5. A process according to claim 4 wherein the configuration imparted to the first electrode (3) is that of a printed electrical resistance means disposed between two spaced portions (4A, 4B) for connection to an electric circuit to produce a double sensor which is hygrometric between the connecting portions (4A—4B) on the one hand and the portion (6) on the other hand and thermometric between the connecting portions (4A—4B).

6. A process according to claim 4 wherein a substrate having a conducting film on its two opposite faces is used, a capacitive sensor in accordance with said claim 4 is caused to appear and is produced on a face, and a printed resistance means which constitutes a thermometric sensor is caused to appear on the opposite face between two spaced connecting portions.

7. A process according to any one of claims 4 to 6 wherein a final film (P3) of hydrophilic polymer of a thickness of several micrometres to several tens of micrometres is deposited from a solution, the solvent of which is different from the solvent of the second film (P2).

8. A process according to claim 7 which uses a 10% polyurethane solution to produce the final film (P3).

9. A process according to claim 2 wherein the second film (P2) of polymer is spread by centrifuging with the substrate in a vectical position.

10. A thin film sensor comprising a rigid support (1) which does not absorb water, a metal film (2) which is deposited on said support (1) and which is separated into two separate adjoining portions (3, 5), of which one (3) is a first capacitor plate and the other (5) is an electrode, a film (P1) of water-repellent polymer which extends over and between the plate (3) and the electrode (5) with spaced points (12) leaving the electrode (5) bare at said points, and an upper porous metal film (13) deposited on the polymer film, brought into contact at the points (12) with the electrode (5) and forming a second capacitor plate, characterised in that the water-repellent polymer (P1) is of the type which in addition to its dielectric properties presents good spreading over the support (1) and over the metal film (2) which covers said support (1) and good adhesion to said support and said metal film and to a second film (P2) of hydrophilic polymer which is selected for its dielectric properties and which is deposited on the first film (P1) and which does not cover the points (12) of the electrode (5).

11. A sensor according to claim 10 characterised in that the first electrode (3) is in the configuration of a printed resistance means disposed between two spaced connecting portions (4A—4B).

12. A sensor according to either one of claims 10 and 11 characterised in that the polymer comprises at least one first water-repellent film (P1) which is deposited on the electrodes (3, 5) and a second hydrophilic film (P2) which is deposited on the first film (P1).

13. A thin film sensor characterised in that the support is a substrate (1) of the printed circuit type with a conducting film on its two opposite faces, one of said faces constituting a sensor according to claim 10 and the opposite face having an electrode in the configuration of a printed resistance means between two connecting portions.

14. A sensor according to any one of claims 10 to 13 characterised in that it comprises a final film (P3) of hydrophilic polymer which is from several micrometres to several tens of micrometres in thickness.

## Fig.1

## Fig.2

## Fig. 3

## Fig. 4

Fig: 5

Fig: 6

Fig: 7